# EUROPEAN PATENT APPLICATION

(11) **EP 4 530 484 A1**
(43) Date of publication of application: **02.04.2025**
(21) Application number: 24157421.9
(22) Date of filing: 13.02.2024
(51) Int. Cl.: F16B 23/00, B25B 15/00, B25B 13/06

(54) **FASTENER, DRIVER BIT, AND PUNCH TOOL**

(30) Priority: 28.09.2023 TW 112137429
(71) Applicant: Kwantex Research Inc., Tainan City 718012 (TW)
(72) Inventor: LIN, Chao-Wei, 718012 Tainan City (TW)
(74) Representative: Stöckeler, Ferdinand

(57) **Abstract**

A fastener (1) includes a screw head (11). The screw head (11) has four driven wall portions (111) and four guiding wall portions (112) that are disposed about a central axis of the fastener (1) in an alternating arrangement. The driven wall portions (111) are equiangularly spaced apart from each other. Each of the guiding wall portions (112) is straight and has two opposite ends that are respectively connected to two of the driven wall portions (111) adjacent to the guiding wall portion (112). The driven wall portions (111) and the guiding wall portions (112) cooperatively define a driven recess (113) that has an opening. A ratio of a longest distance (B) between two of the driven wall portions (111) that are non-adjacent to each other to a longest distance (A) between two of the driven wall portions (111) that are adjacent to each other is greater than 1.16.

## Description

The disclosure relates to a fastener, a driver bit, and a punch tool, and more particularly to a fastener that is different from a conventional inner hex head fastener, a driver bit that is operable to engage the fastener, and a punch tool for forming a recess in the fastener.

A conventional socket fastener has a recess that is generally in the shape of a hexagon (i.e., an inner hex head fastener). According to current standards published by the International Organization for Standardization (ISO) for the inner hex head fastener, a ratio of a distance across corners of the hexagonal recess of the inner hex head fastener to a distance across flats of the hexagonal recess is smaller than 1.1547 (i.e., the ratio is smaller than a ratio of a distance across corners of a regular hexagon to a distance across flats of the regular hexagon). In addition, due to manufacturing tolerance, the hexagonal recess of the conventional socket fastener may not fittingly engage with a conventional driver bit, which may cause damage to the corners of the hexagonal recess when a user uses the driver bit to tighten or loosen the conventional socket fastener. Consequently, the conventional socket fastener may wear out such that the corners of the hexagonal recess may become curved, that a contact area between the conventional socket fastener and the conventional driver bit may be decreased, that a torque exerted by the user or by a power tool may not be sufficiently transmitted to the conventional socket fastener, and that the conventional socket fastener may no longer be driven by the conventional driver bit. Furthermore, because of the hexagonal recess, the conventional socket fastener may not be successfully removed from a mold during its manufacturing process. A punch tool for forming the hexagonal recess of the conventional socket fastener may thus be damaged, and an overall shape and form of the hexagonal recess may thus be affected.

Therefore, an object of the disclosure is to provide a fastener that can alleviate at least one of the drawbacks of the prior art.

According to an aspect of the disclosure, there is provided a fastener according to claim 1.

Another object of the disclosure is to provide a driver bit that can alleviate at least one of the drawbacks of the prior art.

According to an aspect of the disclosure, there is provided a driver bit according to claim 5.

Another object of the disclosure is to provide a punch tool that can alleviate at least one of the drawbacks of the prior art.

According to an aspect of the disclosure, there is provided a punch tool according to claim 9.

Other features and advantages of the disclosure will become apparent in the following detailed description of the embodiment(s) with reference to the accompanying drawings. It is noted that various features may not be drawn to scale.
Fig. 1 is a perspective view of an embodiment of a fastener according to the disclosure.
Fig. 2 is a top view of a screw head of the fastener.
Fig. 3 is a schematic view illustrating a driven recess of the fastener.
Figs. 4 to 7 are schematic views illustrating different configurations of an engaging recess of the fastener.
Fig. 8 is a perspective view of an embodiment of a driver bit according to the disclosure.
Fig. 9 is a sectional view illustrating the fastener and the driver bit.
Fig. 10 is a sectional view illustrating engagement between the driver bit and the driven recess of the fastener.
Fig. 11 is a perspective view illustrating a modification of the driver bit that includes an engaging member.
Fig. 12 is a sectional view illustrating the fastener and the modification of the driver bit.
Fig. 13 is a perspective view of an embodiment of a punch tool according to the disclosure.
Fig. 14 is a perspective view illustrating a modification of the punch tool that includes an engaging protrusion.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

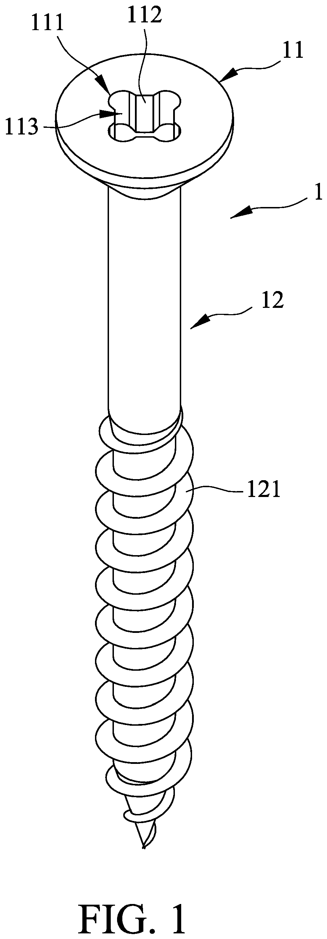

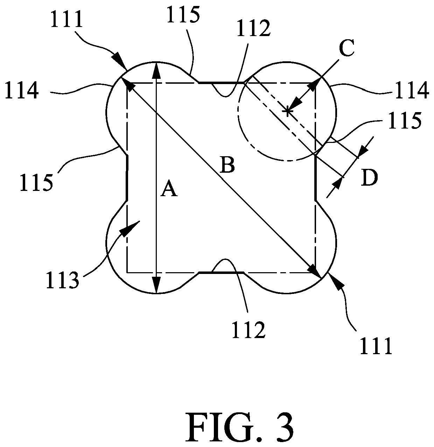

Referring to Figs. 1 to 3, an embodiment of a fastener 1 according to the disclosure includes a screw head 11 and a screw shank 12. The screw shank 12 extends from the screw head 11 in an axial direction of a central axis of the fastener 1, and has at least one thread 121 that helically extends therealong. The screw head 11 has four driven wall portions 111 and four guiding wall portions 112 that are disposed about the central axis of the fastener 1 in an alternating arrangement. The driven wall portions 111 are equiangularly spaced apart from each other. Each of the guiding wall portions 112 is straight and has two opposite ends that are respectively connected to two of the driven wall portions 111 adjacent to the guiding wall portion 112. The driven wall portions 111 and the guiding wall portions 112 cooperatively define a driven recess 113 that has an opening. The screw shank 12 extends from one side of the screw head 11 opposite to the opening of the driven recess 113 in the axial direction of the central axis. A ratio of a longest distance (B) between two of the driven wall portions 111 that are non-adjacent to each other to a longest distance (A) between two of the driven wall portions 111 that are adjacent to each other is greater than 1.16 (i.e., (B) divided by (A) is greater than 1.16). Each of the driven wall portions 111 has a curved section 114 that defines an arc of a circle and that has two opposite ends, and two straight sections 115 each of which extends from a respective one of the ends of the curved section 114 and interconnects the respective one of the ends of the curved section 114 and a respective one of two of the guiding wall portions 112 adjacent to the driven wall portion 111. A central angle of the curved section 114 of each of the driven wall portions 111 is smaller than 180 degrees. A radius of curvature (C) of the curved section 114 of each of the driven wall portions 111 is greater than a length (D) of each of the straight sections 115 of the driven wall portion 111. Therefore, when the fastener 1 is coated with corrosion-resistant paint, the corrosion-resistant paint may easily flow out of the driven recess 113 (i.e., the corrosion-resistant paint may not clog the driven recess 113 during the coating of the fastener 1). In addition, a distance between the central axis of the fastener 1 and each of the driven wall portions 111 on an imaginary plane perpendicular to the central axis is greater than a distance between the central axis and each of corners of an imaginary rectangle defined by the guiding wall portions 112 on the imaginary plane. Thus, the driven recess 113 may be provided with more space at four corners thereof so that the fastener 1 may be driven by a conventional square driver bit. Consequently, the fastener 1 may be used for more purposes.

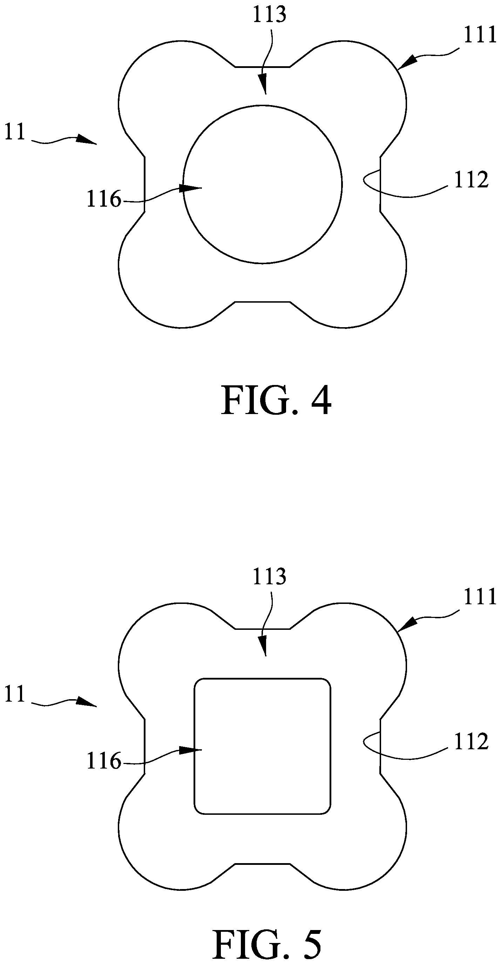

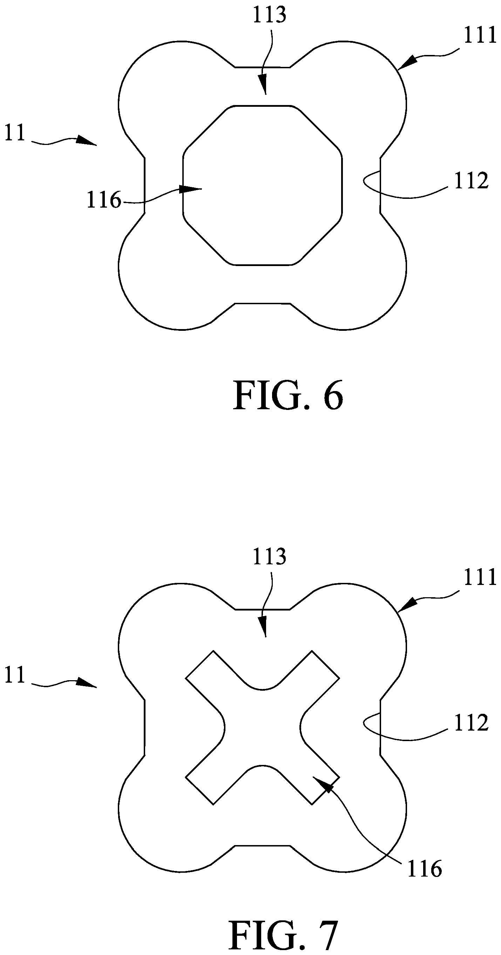

Referring to Figs. 4 to 7, and 12, in a modification of the embodiment, the screw head 11 may be formed with an engaging recess 116 that extends from the driven recess 113 along the axial direction, and that is located below the driven wall portions 111 and the guiding wall portions 112. Specifically, when the screw head 11 is viewed from its top surface, the engaging recess 116 is located radially inwardly of the driven wall portions 111 and the guiding wall portions 112. The engaging recess 116 may have different configurations. As shown in Figs. 4 to 7, a cross section of the engaging recess 116 of the screw head 11 on another imaginary plane perpendicular to the central axis is configured to be one of a circular shape, a quadrilateral shape, an octagonal shape, and a cross shape.

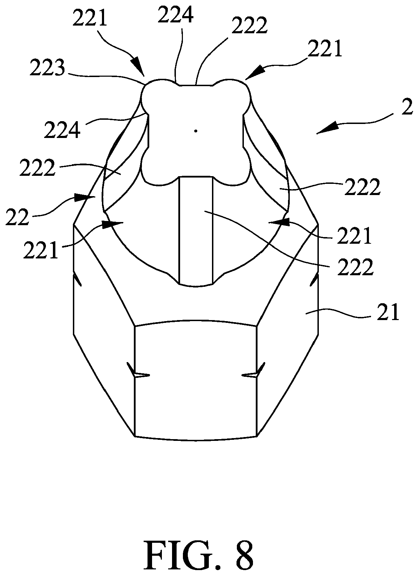

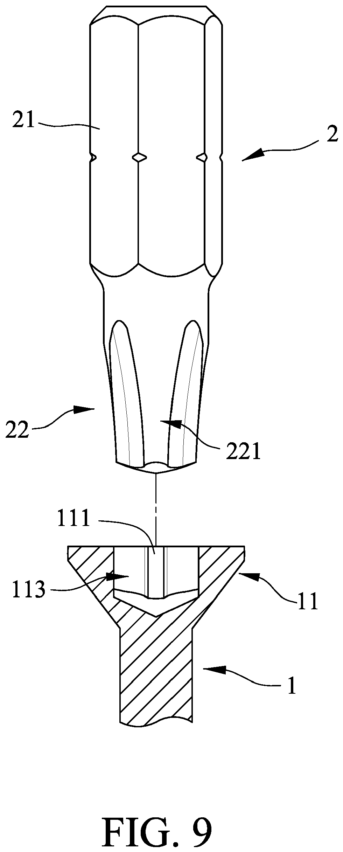

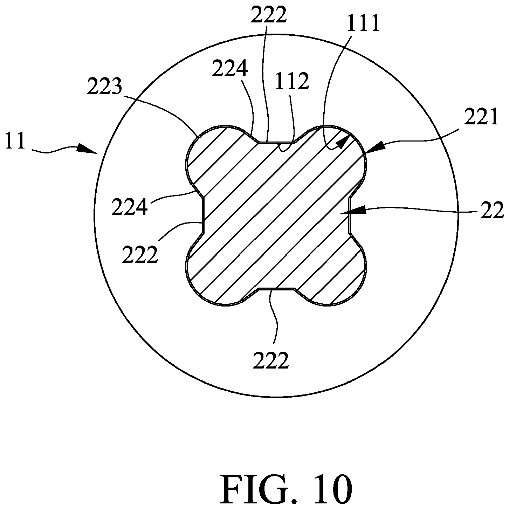

Referring to Figs. 8 to 10, an embodiment of a driver bit 2 according to the disclosure is adapted for driving the fastener 1, and includes a connecting member 21, and a head end member 22 that is disposed on one end of the connecting member 21. The head end member 22 has four driving wall portions 221 and four guiding wall portions 222 that are disposed about a central axis of the driver bit 2 in an alternating arrangement. The driving wall portions 221 of the driver bit 2 are equiangularly spaced apart from each other. A distal edge of each of the guiding wall portions 222 of the driver bit 2 distal from the connecting member 21 is straight and has two opposite ends that are respectively connected to two of the driving wall portions 221 of the driver bit 2 adjacent to the guiding wall portion 222 of the driver bit 2. Specifically, when a user uses the driver bit 2 to tighten or loosen the fastener 1, the driving wall portions 221 of the driver bit 2 respectively correspond in position to the driven wall portions 111 of the fastener 1, and the guiding wall portions 222 of the driver bit 2 respectively correspond in position to the guiding wall portions 112 of the fastener 1 so that the user may insert the head end member 22 into the driven recess 113 of the fastener 1, and may turn the driver bit 2 to drive the fastener 1. A ratio of a longest distance between two of the driving wall portions 221 of the driver bit 2 that are non-adjacent to each other to a longest distance between two of the driving wall portions 221 of the driver bit 2 that are adjacent to each other is greater than 1.16, is greater than a ratio of a distance across corners of a regular hexagon to a distance across flats of the regular hexagon, which is 1.1547, and is also greater than a current standard published by the International Organization for Standardization (ISO) for inner hex head fasteners, in which a ratio of a distance across corners of a hexagonal recess of an inner hex head fastener to a distance across flats of the hexagonal recess of the inner hex head fastener is 1.14. As such, the driver bit 2 may not slip off the fastener 1.

A distal edge of each of the driving wall portions 221 of the driver bit 2 distal from the connecting member 21 has a curved section 223 that defines an arc of a circle and that has two opposite ends, and two straight sections 224 each of which extends from a respective one of the ends of the curved section 223 of the driver bit 2 and interconnects the respective one of the ends of the curved section 223 of the driver bit 2 and a respective one of two of the guiding wall portions 222 of the driver bit 2 adjacent to the driving wall portion 221 of the driver bit 2. A radius of curvature of the curved section 223 of the distal edge of each of the driving wall portions 221 of the driver bit 2 is greater than a length of each of the straight sections 224 of the distal edge of the driving wall portion 221 of the driver bit 2 so that when the user uses the driver bit 2 to drive the fastener 1, a radially-outer side of the curved section 223 of the distal edge of each of the driving wall portions 221 of the driver bit 2 and the curved section 114 of each of the driven wall portions 111 of the fastener 1 may avoid abrasion and damage, and a torque exerted on the driver bit 2 may be sufficiently transmitted to the fastener 1. Moreover, a central angle of the curved section 223 of the distal edge of each of the driving wall portions 221 of the driver bit 2 is smaller than 180 degrees, an arc length of the curved section 223 of the distal edge of each of the driving wall portions 221 of the driver bit 2 on an imaginary plane perpendicular to the central axis of the driver bit 2 is thus shorter than half of the circumference of the circle defined by the curved section 223 of the distal edge of the driving wall portion 221. Therefore, the driver bit 2 may be inserted into the driven recess 113 of the fastener 1 smoothly. By forming the straight sections 224, a contact area between the driver bit 2 and the driven recess 113 of the fastener 1 is increased. Although manufacturing tolerance exists in the driver bit 2 and the fastener 1, the driver bit 2 and the fastener 1 may be able to fittingly engage with each other by the presence of the straight sections 224 so that the torque exerted on the driver bit 2 may be sufficiently transmitted to the fastener 1.

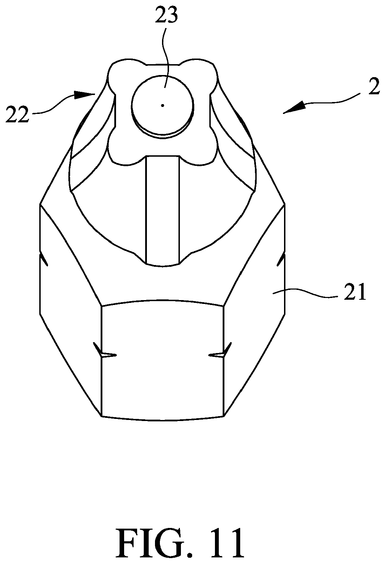

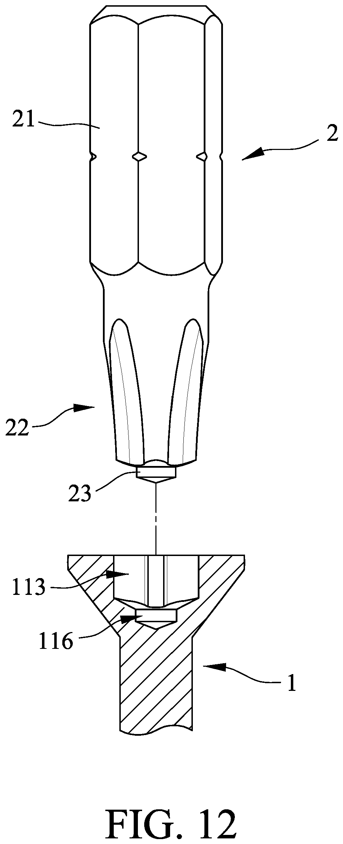

Referring to Fig. 11, in cooperation with Fig. 12, in a modification of the embodiment of the driver bit 2, the driver bit 2 further includes an engaging member 23 that protrudes from the head end member 22, and that protrudes away from the connecting member 21 along the central axis of the driver bit 2. The engaging member 23 may have different configurations. For example, as shown in Fig. 11, a cross section of the engaging member 23 of the driver bit 2 on another imaginary plane perpendicular to the central axis of the driver bit 2 is configured to be a circular shape. In one embodiment, a cross section of the engaging member 23 of the driver bit 2 on the another imaginary plane perpendicular to the central axis of the driver bit 2 may be one of a quadrilateral shape, an octagonal shape, and a cross shape. When the driver bit 2 is inserted into the driven recess 113, the engaging member 23 engages the engaging recess 116 of the fastener 1, thereby increasing a contact area between the driver bit 2 and the fastener 1. As such, when the user turns the fastener 1 via the driver bit 2, the driver bit 2 may not slip off the fastener 1, thereby enhancing the stability during operation.

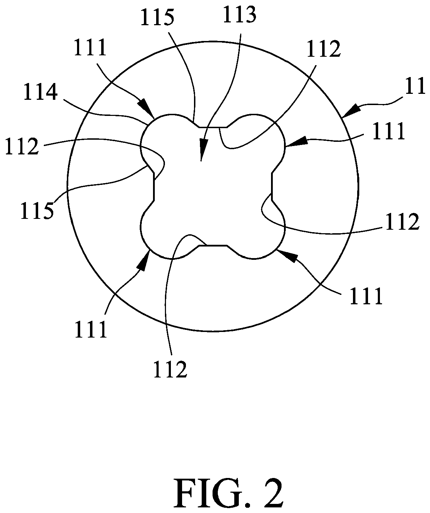

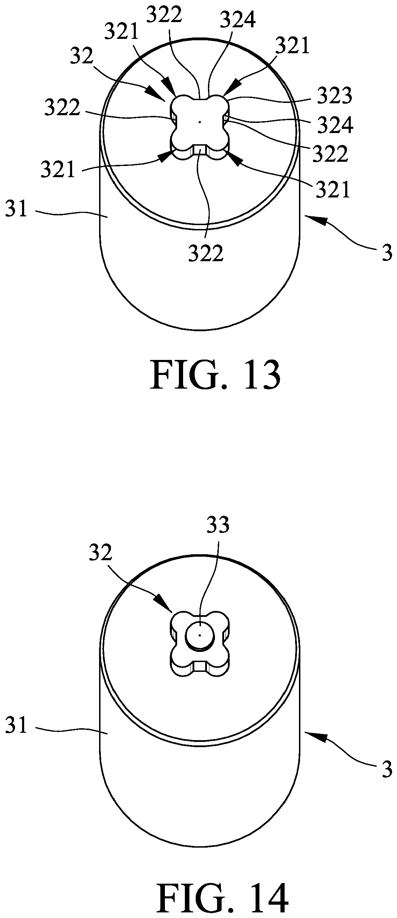

Referring to Fig. 13, in cooperation with Fig. 2, an embodiment of a punch tool 3 according to the disclosure is adapted for forming the driven recess 113 of the fastener 1, and includes a main body 31, and a punch head 32 that is disposed on one end of the main body 31. The punch head 32 has four driven wall portions 321 and four guiding wall portions 322 that are disposed about a central axis of the punch tool 3 in an alternating arrangement. The driven wall portions 321 of the punch tool 3 are equiangularly spaced apart from each other. Each of the guiding wall portions 322 of the punch tool 3 is straight and has two opposite ends that are respectively connected to two of the driven wall portions 321 of the punch tool 3 adjacent to the guiding wall portion 322 of the punch tool 3. A ratio of a longest distance between two of the driven wall portions 321 of the punch tool 3 that are non-adjacent to each other to a longest distance between two of the driven wall portions 321 of the punch tool 3 that are adjacent to each other is greater than 1.16. Each of the driven wall portions 321 of the punch tool 3 has a curved section 323 that defines an arc of a circle and that has two opposite ends, and two straight sections 324 each of which extends from a respective one of the ends of the curved section 323 of the punch tool 3 and interconnects the respective one of the ends of the curved section 323 of the punch tool 3 and a respective one of two of the guiding wall portions 322 of the punch tool 3 adjacent to the driven wall portion 321 of the punch tool 3. A central angle of the curved section 323 of each of the driven wall portions 321 of the punch tool 3 is smaller than 180 degrees. A radius of curvature of the curved section 323 of each of the driven wall portions 321 of the punch tool 3 is greater than a length of each of the straight sections 324 of the driven wall portion 321 of the punch tool 3. By virtue of the straight sections 115, 324, the punch head 32 of the punch tool 3 may easily be separated from the driven recess 113 of the fastener 1 after forming the driven recess 113. Thus, the punch tool 3 may avoid damage caused by failure to be separated from the driven recess 113, thereby increasing the service life of the punch tool 3.

Referring to Fig. 14, in cooperation with Fig. 4, in a modification of the embodiment of the punch tool 3, the punch tool 3 further includes an engaging protrusion 33 that protrudes from the punch head 32, and that protrudes away from the main body 31 along the central axis of the punch tool 3. A cross section of the engaging protrusion 33 of the punch tool 3 on an imaginary plane perpendicular to the central axis of the punch tool 3 is configured to be one of a circular shape, a quadrilateral shape, an octagonal shape, and a cross shape so that the engaging recess 116 may be formed in a shape that corresponds to a shape of the engaging protrusion 33.

In summary, by virtue of the ratio of the longest distance (B) between two of the driven wall portions 111 that are non-adjacent to each other to the longest distance (A) between two of the driven wall portions 111 that are adjacent to each other being greater than 1.16, and by virtue of the ratio of the longest distance between two of the driving wall portions 221 of the driver bit 2 that are non-adjacent to each other to the longest distance between two of the driving wall portions 221 of the driver bit 2 that are adjacent to each other being greater than 1.16, the likelihood that the driver bit 2 slips off the driven recess 113 during operation may be greatly lowered. Furthermore, the central angle of the curved section 114 of each of the driven wall portions 111 is smaller than 180 degrees, an arc length of the curved section 114 of each of the driven wall portions 111 of the fastener 1 on the imaginary plane perpendicular to the central axis of the fastener 1 is thus shorter than half of the circumference of the circle defined by the curved section 114 of the driven wall portion 111. By virtue of the arc length of the curved section 114 of each of the driven wall portions 111 of the fastener 1 being shorter than, and being close to half of the circumference of the circle defined by the curved section 114 of the driven wall portion 111, the driver bit 2 may be inserted into the driven recess 113 of the fastener 1 smoothly. By virtue of each of the driven wall portions 111 having the curved section 114, the radially-outer side of the curved section 223 of the distal edge of each of the driving wall portions 221 of the driver bit 2 and the curved section 114 of each of the driven wall portions 111 of the fastener 1 may avoid abrasion and damage during the operation, and the torque exerted on the driver bit 2 may be sufficiently transmitted to the fastener 1. In addition, by virtue of the straight sections 115, 224, the contact area between the driver bit 2 and the fastener 1 is increased. Although the manufacturing tolerance exists in the driver bit 2 and the fastener 1, the driver bit 2 and the fastener 1 may still be able to fittingly engage with each other by the presence of the straight sections 115, 224 so that the torque exerted on the driver bit 2 may be sufficiently transmitted to the fastener 1. Moreover, by virtue of the straight sections 115, 324, the punch tool 3 may easily be separated from the fastener 1 after forming the driven recess 113, thereby lowering the likelihood that the punch tool 3 is damaged during the manufacturing process of the fastener 1. Therefore, the purpose of the disclosure is achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A fastener (1) comprising:
a screw head (11); and
a screw shank (12);
**characterized in that**:
the screw head (11) has four driven wall portions (111) and four guiding wall portions (112) that are disposed about a central axis of the fastener (1) in an alternating arrangement, the driven wall portions (111) being equiangularly spaced apart from each other, each of the guiding wall portions (112) being straight and having two opposite ends that are respectively connected to two of the driven wall portions (111) adjacent to the guiding wall portion (112), the driven wall portions (111) and the guiding wall portions (112) cooperatively defining a driven recess (113) that has an opening, a ratio of a longest distance (B) between two of the driven wall portions (111) that are non-adjacent to each other to a longest distance (A) between two of the driven wall portions (111) that are adjacent to each other being greater than 1.16, each of the driven wall portions (111) having a curved section (114) that defines an arc of a circle and that has two opposite ends, and two straight sections (115) each of which extends from a respective one of the ends of the curved section (114) and interconnects the respective one of the ends of the curved section (114) and a respective one of two of the guiding wall portions (112) adjacent to the driven wall portion (111), a central angle of the curved section (114) of each of the driven wall portions (111) being smaller than 180 degrees; and
the screw shank (12) extends from one side of the screw head (11) opposite to the opening of the driven recess (113) in an axial direction of the central axis, and has at least one thread (121) that helically extends therealong.

2. The fastener (1) as claimed in claim 1, wherein a radius of curvature (C) of the curved section (114) of each of the driven wall portions (111) is greater than a length (D) of each of the straight sections (115) of the driven wall portion (111).

3. The fastener (1) as claimed in any one of claims 1 and 2, wherein the screw head (11) is formed with an engaging recess (116) that extends from the driven recess (113) along the axial direction, and that is located below the driven wall portions (111) and the guiding wall portions (112).

4. The fastener (1) as claimed in claim 3, wherein a cross section of the engaging recess (116) of the screw head (11) on an imaginary plane perpendicular to the central axis is configured to be one of a circular shape, a quadrilateral shape, an octagonal shape, and a cross shape.

5. A driver bit (2) adapted for driving the fastener (1) of claim 1, the driver bit (2) comprising:
a connecting member (21); and
a head end member (22);
**characterized in that**:
the head end member (22) is disposed on one end of the connecting member (21) and has four driving wall portions (221) and four guiding wall portions (222) that are disposed about a central axis of the driver bit (2) in an alternating arrangement, the driving wall portions (221) of the driver bit (2) being equiangularly spaced apart from each other, a distal edge of each of the guiding wall portions (222) of the driver bit (2) distal from the connecting member (21) being straight and having two opposite ends that are respectively connected to two of the driving wall portions (221) of the driver bit (2) adjacent to the guiding wall portion (222) of the driver bit (2), a ratio of a longest distance between two of the driving wall portions (221) of the driver bit (2) that are non-adjacent to each other to a longest distance between two of the driving wall portions (221) of the driver bit (2) that are adjacent to each other being greater than 1.16, a distal edge of each of the driving wall portions (221) of the driver bit (2) distal from the connecting member (21) having a curved section (223) that defines an arc of a circle and that has two opposite ends, and two straight sections (224) each of which extends from a respective one of the ends of the curved section (223) of the driver bit (2) and interconnects the respective one of the ends of the curved section (223) of the driver bit (2) and a respective one of two of the guiding wall portions (222) of the driver bit (2) adjacent to the driving wall portion (221) of the driver bit (2), a central angle of the curved section (223) of the distal edge of each of the driving wall portions (221) of the driver bit (2) being smaller than 180 degrees.

6. The driver bit (2) as claimed in claim 5, wherein a radius of curvature of the curved section (223) of the distal edge of each of the driving wall portions (221) of the driver bit (2) is greater than a length of each of the straight sections (224) of the distal edge of the driving wall portion (221) of the driver bit (2).

7. The driver bit (2) as claimed in any one of claims 5 and 6, further comprising an engaging member (23) that protrudes from the head end member (22), and that protrudes away from the connecting member (21) along the central axis of the driver bit (2).

8. The driver bit (2) as claimed in claim 7, wherein a cross section of the engaging member (23) of the driver bit (2) on an imaginary plane perpendicular to the central axis of the driver bit (2) is configured to be one of a circular shape, a quadrilateral shape, an octagonal shape, and a cross shape.

9. A punch tool (3) adapted for forming the driven recess (113) of the fastener (1) of claim 1, the punch tool (3) comprising:
a main body (31); and
a punch head (32);
**characterized in that**:
the punch head (32) is disposed on one end of the main body (31) and has four driven wall portions (321) and four guiding wall portions (322) that are disposed about a central axis of the punch tool (3) in an alternating arrangement, the driven wall portions (321) of the punch tool (3) being equiangularly spaced apart from each other, each of the guiding wall portions (322) of the punch tool (3) being straight and having two opposite ends that are respectively connected to two of the driven wall portions (321) of the punch tool (3) adjacent to the guiding wall portion (322) of the punch tool (3), a ratio of a longest distance between two of the driven wall portions (321) of the punch tool (3) that are non-adjacent to each other to a longest distance between two of the driven wall portions (321) of the punch tool (3) that are adjacent to each other being greater than 1.16, each of the driven wall portions (321) of the punch tool (3) having a curved section (323) that defines an arc of a circle and that has two opposite ends, and two straight sections (324) each of which extends from a respective one of the ends of the curved section (323) of the punch tool (3) and interconnects the respective one of the ends of the curved section (323) of the punch tool (3) and a respective one of two of the guiding wall portions (322) of the punch tool (3) adjacent to the driven wall portion (321) of the punch tool (3), a central angle of the curved section (323) of each of the driven wall portions (321) of the punch tool (3) being smaller than 180 degrees.

10. The punch tool (3) as claimed in claim 9, wherein a radius of curvature of the curved section (323) of each of the driven wall portions (321) of the punch tool (3) is greater than a length of each of the straight sections (324) of the driven wall portion (321) of the punch tool (3).

11. The punch tool (3) as claimed in any one of claims 9 and 10, further comprising an engaging protrusion (33) that protrudes from the punch head (32), and that protrudes away from the main body (31) along the central axis of the punch tool (3).

12. The punch tool (3) as claimed in claim 11, wherein a cross section of the engaging protrusion (33) of the punch tool (3) on an imaginary plane perpendicular to the central axis of the punch tool (3) is configured to be one of a circular shape, a quadrilateral shape, an octagonal shape, and a cross shape.

## Amended claims

### Amended claims in accordance with Rule 137(2) EPC.

1. A fastener (1) comprising:
a screw head (11) having four driven wall portions (111) and four guiding wall portions (112) that are disposed about a central axis of the fastener (1) in an alternating arrangement, the driven wall portions (111) being equiangularly spaced apart from each other, each of the guiding wall portions (112) being straight and having two opposite ends that are respectively connected to two of the driven wall portions (111) adjacent to the guiding wall portion (112), a ratio of a longest distance (B) between two of the driven wall portions (111) that are non-adjacent to each other to a longest distance (A) between two of the driven wall portions (111) that are adjacent to each other being greater than 1.16; and
a screw shank (12) having at least one thread (121) that helically extends therealong;
**characterized in that**:
the driven wall portions (111) and the guiding wall portions (112) cooperatively define a driven recess (113) that has an opening, each of the driven wall portions (111) having a curved section (114) that defines an arc of a circle and that has two opposite ends, and two straight sections (115) each of which extends from a respective one of the ends of the curved section (114) and interconnects the respective one of the ends of the curved section (114) and a respective one of two of the guiding wall portions (112) adjacent to the driven wall portion (111), a central angle of the curved section (114) of each of the driven wall portions (111) being smaller than 180 degrees, wherein for each of the driven wall portions (111), each of the straight sections (115) is inclined to the respective one of the two of the guiding wall portions (112) adjacent to the driven wall portion (111) and is straight; and
the screw shank (12) extends from one side of the screw head (11) opposite to the opening of the driven recess (113) in an axial direction of the central axis.

2. The fastener (1) as claimed in claim 1, wherein a radius of curvature (C) of the curved section (114) of each of the driven wall portions (111) is greater than a length (D) of each of the straight sections (115) of the driven wall portion (111).

3. The fastener (1) as claimed in any one of claims 1 and 2, wherein the screw head (11) is formed with an engaging recess (116) that extends from the driven recess (113) along the axial direction, and that is located below the driven wall portions (111) and the guiding wall portions (112).

4. The fastener (1) as claimed in claim 3, wherein a cross section of the engaging recess (116) of the screw head (11) on an imaginary plane perpendicular to the central axis is configured to be one of a circular shape, a quadrilateral shape, an octagonal shape, and a cross shape.

5. A driver bit (2) adapted for driving the fastener (1) of claim 1, the driver bit (2) comprising:
a connecting member (21); and
a head end member (22) disposed on one end of the connecting member (21) and having four driving wall portions (221) and four guiding wall portions (222) that are disposed about a central axis of the driver bit (2) in an alternating arrangement, the driving wall portions (221) of the driver bit (2) being equiangularly spaced apart from each other, a distal edge of each of the guiding wall portions (222) of the driver bit (2) distal from the connecting member (21) being straight and having two opposite ends that are respectively connected to two of the driving wall portions (221) of the driver bit (2) adjacent to the guiding wall portion (222) of the driver bit (2), a ratio of a longest distance between two of the driving wall portions (221) of the driver bit (2) that are non-adjacent to each other to a longest distance between two of the driving wall portions (221) of the driver bit (2) that are adjacent to each other being greater than 1.16;
**characterized in that**:
a distal edge of each of the driving wall portions (221) of the driver bit (2) distal from the connecting member (21) has a curved section (223) that defines an arc of a circle and that has two opposite ends, and two straight sections (224) each of which extends from a respective one of the ends of the curved section (223) of the driver bit (2) and interconnects the respective one of the ends of the curved section (223) of the driver bit (2) and a respective one of two of the guiding wall portions (222) of the driver bit (2) adjacent to the driving wall portion (221) of the driver bit (2), a central angle of the curved section (223) of the distal edge of each of the driving wall portions (221) of the driver bit (2) being smaller than 180 degrees, wherein for the distal edge of each of the driving wall portions (221) of the driver bit (2) distal from the connecting member (21), each of the straight sections (224) is inclined to the respective one of two of the guiding wall portions (222) of the driver bit (2) adjacent to the driving wall portion (221) of the driver bit (2) and is straight.

6. The driver bit (2) as claimed in claim 5, wherein a radius of curvature of the curved section (223) of the distal edge of each of the driving wall portions (221) of the driver bit (2) is greater than a length of each of the straight sections (224) of the distal edge of the driving wall portion (221) of the driver bit (2).

7. The driver bit (2) as claimed in any one of claims 5 and 6, further comprising an engaging member (23) that protrudes from the head end member (22), and that protrudes away from the connecting member (21) along the central axis of the driver bit (2).

8. The driver bit (2) as claimed in claim 7, wherein a cross section of the engaging member (23) of the driver bit (2) on an imaginary plane perpendicular to the central axis of the driver bit (2) is configured to be one of a circular shape, a quadrilateral shape, an octagonal shape, and a cross shape.

9. A punch tool (3) adapted for forming the driven recess (113) of the fastener (1) of claim 1, the punch tool (3) comprising:
a main body (31); and
a punch head (32) disposed on one end of the main body (31) and having four driven wall portions (321) and four guiding wall portions (322) that are disposed about a central axis of the punch tool (3) in an alternating arrangement, the driven wall portions (321) of the punch tool (3) being equiangularly spaced apart from each other, each of the guiding wall portions (322) of the punch tool (3) being straight and having two opposite ends that are respectively connected to two of the driven wall portions (321) of the punch tool (3) adjacent to the guiding wall portion (322) of the punch tool (3), a ratio of a longest distance between two of the driven wall portions (321) of the punch tool (3) that are non-adjacent to each other to a longest distance between two of the driven wall portions (321) of the punch tool (3) that are adjacent to each other being greater than 1.16;
**characterized in that**:
each of the driven wall portions (321) of the punch tool (3) has a curved section (323) that defines an arc of a circle and that has two opposite ends, and two straight sections (324) each of which extends from a respective one of the ends of the curved section (323) of the punch tool (3) and interconnects the respective one of the ends of the curved section (323) of the punch tool (3) and a respective one of two of the guiding wall portions (322) of the punch tool (3) adjacent to the driven wall portion (321) of the punch tool (3), a central angle of the curved section (323) of each of the driven wall portions (321) of the punch tool (3) being smaller than 180 degrees, wherein for each of the driven wall portions (321) of the punch tool (3), each of the straight sections (324) is inclined to the respective one of the two of the guiding wall portions (322) of the punch tool (3) adjacent to the driven wall portion (321) of the punch tool (3) and is straight.

10. The punch tool (3) as claimed in claim 9, wherein a radius of curvature of the curved section (323) of each of the driven wall portions (321) of the punch tool (3) is greater than a length of each of the straight sections (324) of the driven wall portion (321) of the punch tool (3).

11. The punch tool (3) as claimed in any one of claims 9 and 10, further comprising an engaging protrusion (33) that protrudes from the punch head (32), and that protrudes away from the main body (31) along the central axis of the punch tool (3).

12. The punch tool (3) as claimed in claim 11, wherein a cross section of the engaging protrusion (33) of the punch tool (3) on an imaginary plane perpendicular to the central axis of the punch tool (3) is configured to be one of a circular shape, a quadrilateral shape, an octagonal shape, and a cross shape.
